# EUROPÄISCHE PATENTSCHRIFT

(11) **EP 0 687 246 B1**
(45) Veröffentlichungstag und Bekanntmachung des Hinweises auf die Patenterteilung: **01.04.1998**
(21) Anmeldenummer: 93923518.0
(22) Anmeldetag: 21.10.1993
(51) Int. Cl.: C01G 27/02, C01G 27/00, C01B 13/34

(54) **VERFAHREN ZUR HERSTELLUNG VON STABILISIERTEM HAFNIUMOXIDPULVER ODER HAFNIUMOXID ENTHALTENDEM PULVER**
PROCESS FOR PRODUCING STABILISED HAFNIUM OXIDE POWDER OR A HAFNIUM OXIDE-CONTAINING POWDER
PROCEDE DE FABRICATION DE POUDRE D'OXYDE D'HAFNIUM STABILISE OU DE POUDRE CONTENANT DE L'OXYDE D'HAFNIUM

(30) Priorität: 04.11.1992 DE 4237272
(43) Veröffentlichungstag der Anmeldung: 20.12.1995
(73) Patentinhaber: Brandau, Egbert, Dr., 63755 Alzenau (DE)
(72) Erfinder: Brandau, Egbert, Dr., 63755 Alzenau (DE)
(86) Internationale Anmeldenummer: EP9302911
(87) Internationale Veröffentlichungsnummer: WO9410090

(56) Entgegenhaltungen:
- WO-A-85/03014
- WO-A-92/07653
- WO-A-92/19538
- FR-A- 1 578 319
- GB-A- 1 175 834
- US-A- 4 043 507

## Beschreibung

Die Erfindung bezieht sich auf ein Verfahren zur Herstellung von stabilisiertem Hafniumoxidpulver oder Hafniumoxid enthaltendem Pulver bzw. von Pulver aus Y₂O₃-stabilisiertem Hafniumoxid.

In neuerer Zeit geht der Trend der Keramikentwicklung hin zu immer hochwertigeren keramischen Werkstoffen mit dem Ziel, die vorteilhaften Eigenschaften dieser Materialien, wie z.B. gute Temperaturbeständigkeit, große Härte und Verschleißfestigkeit sowie gute Chemikalienbeständigkeit, niedrigere Wärmeausdehnungskoeffizienten, höheren Schmelzpunkt, im technischen Bereich auszunutzen. An oberster Steile steht dabei, höchste Dichten und Festigkeiten der Formkörper zu erreichen, die Sintertemperatur zu senken und in vielen Anwendungsfällen auch die Reinheit der Keramikwerkstoffe wesentlich zu erhöhen.

Um diese Ziele zu erreichen, müssen möglichst reine, homogene, gut verpreßbaze Pulver mit hoher Sinterfähigkeit im technischen Maßstab zur Verfügung stehen, die durch einfache Verfahren möglichst preisgünstig hergestellt werden können.

Ein aussichtsreicher Werkstoff, der die genannten Anforderungen erfüllen kann, ist teilstabilisiertes Zirkonoxid, sog. PSZ. Bei diesem Werkstoff wird die tetragonale Kristallstruktur, die bei reinem Zirkonoxid nur bei Temperaturen über 1000°C stabil ist, durch Zusatz geeigneter Additive stabilisiert. Als stabilisierende Additive werden Metalloxide wie CaO, MgO, Y₂O₃, CeO₂ u.a. zugesetzt. Wichtig dabei ist die Homogenität der Pulvermischung, was bei den üblichen Trockensyntheseverfahren nur schwer und auf umständlichem Wege in mehreren Stufen, wie Erzeugung von Vorprodukten durch Mischen der Ausgangspulver, Pressen und Wärmebehandeln und schließlich Mahlen zu einem feinen Pulvergemisch, erreicht werden kann. Auch Varianten wie Schmelzen eutektischer Gemische sind zur Verbesserung der Homogenität bekannt geworden.

Zur Verbesserung der Homogenität und Sinterfähigkeit der Pulvergemische sind sogenannte Naßsyntheseverfahren entwickelt worden. Dabei werden entweder Salzlösungen, die die Keramik bildenden Komponenten enthalten, ausgefällt bzw. anderweitig verfestigt oder Hydrosole dieser Stoffe durch Gelbildung verfestigt. Neuerdings werden auch Alkoholate der die Keramik bildenden Metalle zur Gelbildung herangezogen.

Bei den Kofällungsverfahren werden feindisperse Pulver meist aus den Chloriden oder Nitraten der Metalle durch Hydroxidfällung mittels basischer Stoffe, meist Ammoniak, oder durch Fällung von leichtzersetzlichen Salzen organischer Säuren, z.B. Oxalsäure, erzeugt.

Besondere Bedeutung wird neuerdings den Sol-Gel-Verfahren beigemessen, weil dabei sehr sinteraktive Pulver mit großer Oberfläche entstehen. Im einfachsten Falle lassen sich Sole durch Hydrolyse geeigneter Salzlösungen in der Siedehitze herstellen (DE-A 34 08 096). Beim Eintrocknen des Sols und nachfolgenden Kalzinieren entstehen aber auch grobstückige Gelbrocken, die erst noch längere Zeit zu Pulver gemahlen werden müssen.

Die klassischen Methoden der Sol-Gel-Technik im allgemeinen und zur Herstellung von Y₂O₃-stabilisiertem Zirkonoxid im speziellen beschreiben J.L. Woodhead und D.L. Segal in "Sol-gel processing", Chemistry in Britain, April 1984, S. 310-313. Breiter Raum wird dabei der Solherstellung gewidmet, wobei ausdrücklich darauf hingewiesen wird, daß die Herstellungskosten in Relation zum Wert des erzeugten keramischen Produkts stehen müssen. In der Tat sind die dort genannten Wege wirtschaftlich sehr aufwendig, weil chemisch kompliziert. Die Solventextraktion als Methode zur Herstellung von stabilen Hydrosolen, die ein großes Anionendefizit haben müssen, ist mit langkettigen Aminen (R₃C-NH₂ mit C₁₈ < R < C₂₂) zwar relativ einfach durchzuführen, jedoch erfordert die Regenerierung dieser Amine einen erheblichen chemischen Aufwand und führt zu großem Abfallvolumen. Auch die Hydroxidfällung und nachfolgende Peptisation des salzfrei gewaschenen Niederschlages mit wenig Mineralsäure, meist Salpetersäure, ergibt große Abfallvolumina an Filtrat. Außerdem müssen die zunächst verdünnt anfallenden Sole durch Kochen erst wieder aufkonzentriert werden. Die Methode der thermischen Zersetzung von Metallsalzen leichtflüchtiger Säuren, wie die Chloride oder Nitrate, hat ebenfalls Nachteile; einmal wegen der Korrosionswirkung der HCl- bzw. NOₓ-Dämpfe, zum anderen, weil nicht alle Elemente solche Salze bilden; außerdem erhält man nur unter genau definierten Bedingungen peptisierbare Oxidhydrate, wie am Beispiel Thoriumnitrat beschrieben ist.

Der Nachteil des Sol-Gel-Verfahrens in seinen Varianten besteht hauptsächlich in der verfahrenstechnisch aufwendigen Solherstellung, entweder durch Fällung der Metallhydroxide und Peptisation oder durch Entfernung der Anionen mittels langkettiger organischer Amine (Solventextraktion) oder auch durch thermische Zersetzung von Salzen leichtflüchtiger Säuren (Salpetersäure, Oxalsäure) und anschließende Peptisation der Metalloxide.

Der EP 0 261 590 A2 ist ein Verfahren zur Herstellung von Metalloxiden oder Metallmischoxiden zu entnehmen. Dabei wird eine wässrige Lösung eines Zirkonsalzes, welches ein Additiv enthalten kann, mittels Ultraschall vertropft. Hierdurch werden Tropfengrößen zwischen 10 und 50µm erzeugt.

Nach der US 3,384,687 wird eine Zirkon-Nitratlösung in ein dehydratisierendes Lösungsmittel gegeben, um sodann diese Mischung in einen Gegenstrom eines gleichfalls dehydratisierenden Lösungsmittels einzuführen. Dabei kann wahlweise Ammoniakgas zugesetzt werden.

Um Hafniumoxid-Pulver herzustellen, wird nach US 4,140,771 das Sol-Gel-Verfahren benutzt.

Der vorliegenden Erfindung liegt die Aufgabe zugrunde, ein Verfahren zur Herstellung von stabilisiertem Hafniumoxidpulver oder Hafniumoxid enthaltendem Pulver für hochdichte keramische Werkstoffe zu finden, durch das ein homogenes, gut verpreßbares, sinterfähiges Pulver mit großer Oberfläche erzeugt werden kann, welches zudem eine gute Rieselfähigkeit haben und außerdem wirtschaftlich herstellbar sein soll. Auch sollen die gewonnenen Teilchen eine gleichmäßige Kugelgeometrie mit kleiner Streuung aufweisen.

Das Problem wird erfindungsgemäß im wesentlichen dadurch gelöst, daß eine zumindest ein gehärtetes und/oder feindispersiertes folgender Additive wasserlösliche Metallsalze und/oder feindisperse Metalloxide und/oder Yttriumnitrat und/oder Lanthanidennitrate und/oder Titanoxid und/oder ein wasserlösliches organisches Polymer wie Polyvinylalkohol und/oder ein Dispergiermittel wie Isopropanol oder Tetrahydrofurfuryalkohol enthaltende, bis kurz vor dem Fällpunkt abgestumpfe Lösung eines Hafniumsalzes oder eines Hafnium und Zirkonium oder Titan enthaltenden Salzes in Tröpfchenform mittels elektromagnetischer Schwingungsanregung vertropft wird, daß die Tröpfchen durch Einwirken von Ammoniak und/oder Wasserdampf zu diskreten Gelteilchen verfestigt werden, daß danach die Gelteilchen frei von Ammoniumsalzen oder Hydrolyseprodukten gewaschen und anschließend entwässert, getrocknet und kalziniert werden.

Durch Kofällung von wäßrigen Hafniumsalzlösungen oder Hafniumsalz enthaltenden Lösungen mit zugesetzten Salzen stabilisierender Metalloxide können homogene, sinteraktive Pulver hergestellt werden.

Erfindungsgemäß wird diese Kofällung wäßriger Salzlösungen von Hafnium und Additiven durch Vertropfen der Lösung und Einwirkung von Ammoniak und/oder Wasserdampf auf die Tropfen durchgeführt.

Überraschenderweise hat sich gezeigt, daß Hafniumhydroxid mit Additiven auch dann als Gel gefällt wird, wenn Lösungen verwendet werden, bei denen das Nitrat/Hafnium-Molverhältnis über 1,1:1 liegt, und die ein wasserlösliches organisches Polymer, vorzugsweise Polyvinylalkohol, gelöst enthalten.

Es können auch Hafniumsalze, z.B. Carbonate (basische Carbonate, Ammonium-Carbonate), Nitrat, Chlorid, von stöchiometrischer Zusammensetzung verwendet werden, wie z.B. Hf(NO₃)₄, HfO(NO₃)₂, Hf(CH₃COO)₄, Hf, Zr(CH₃COO)₄, Hf(C₂H₅COO)₄, Hf, Zr(C₂H₅COO)₄ oder Alkoxide (z.B. Hf(OC₃H₇)₄, Hf(OC₄H₉)₄, Hf(OR)₄).

Um eine spontane Hydroxidfällung in den Tropfen zu ermöglichen, wird die Lösung vorher mit Ammoniak maximal bis kurz vor dem Fällpunkt abgestumpft. Das dabei gebildete Ammoniumsalz stört im Prozeß nicht, da es später bei der Fällung sowieso entsteht.

Gemäß der Erfindung hat es sich als vorteilhaft erwiesen, die Tropfen vor dem Eintauchen in die Ammoniaklösung in einer Ammoniakgasatmosphäre chemisch vorzuhärten. Durch die Maßnahme wird während des Fällens eine dünne Haut an der Tropfenoberfläche gebildet und so die Kugelform stabilisiert. Dadurch wird das Zerplatzen der Teilchen auf der Oberfläche der Ammoniaklösung verhindert.

Bei den Alkoxyverbindungen hat es sich als zweckmäßig erwiesen, eine chemische Hydrolyse mittels Wasserdampf vor Eintritt in die wässrige Lösung vorzunehmen.

Bei dieser Art der Kofällung gemäß der Erfindung aus Lösung in Gegenwart eines gelösten organischen Polymers entstehen Oxidhydrate von Gelstruktur mit großer Oberfläche. Diese Pulver sind daher besonders sinteraktiv und ergeben hohe Sinterdichten der daraus hergestellten Formkörper. Durch Kofällung von Hafniumoxid oder Hafniumoxid enthaltenden Mischoxiden und Additiven aus einer homogenen Lösung dieser Komponenten in Gegenwart eines gelösten organischen Polymers, vorzugsweise Polyvinylalkohol, erhält man erfindungsgemäß ideal vermischte, d.h. vollständig homogene Pulver von gleichbleibender Qualität und hoher Sinterfähigkeit. Falls ein Additiv nicht gelöst werden kann oder aufgrund des zu hohen pH-Wertes der Salzlösung ausgefällt wird, kann das Additiv auch in der Lösung suspendiert werden. In diesem Falle setzt man der Lösung mit besonderem Vorteil ein Dispergiermittel zu, vorzugsweise einen primären Alkohol, insbesondere Isopropanol oder Tetrahydrofurfurylalkohol. Wenn das Additiv in äußerst feindisperser Form vorliegt, z.B. als feingemahlenes Pulver oder als frischgefällter amorpher Niederschlag, erhält man ebenfalls ein homogenes Pulver von hoher Sinterfähigkeit.

Die Kofällung der Oxidhydrate in Tropfenform hat weiterhin den Vorteil, daß dadurch regelmäßige Teilchen von engem Kornspektrum hergestellt werden können. Die Teilchengröße des Feststoffes kann dabei durch Einstellung der Tropfengröße gesteuert werden.

Dadurch ist es möglich, die Korngröße in einem weiten Bereich zu variieren, vorzugsweise zwischen 0,1 und 3 mm. Aber auch kleinere und größere Teilchen können leicht hergestellt werden. Dafür benutzt man ein Verfahren zur Zerlegung eines Flüssigkeitsstrahles in Tropfen. Erfindungsgemäß werden die Tropfen durch Einwirkung mechanischer Schwingungen auf die durch eine Düse ausfließende Flüssigkeit erzeugt, indem elektromagnetische Schwingungen entweder direkt auf die Düse oder auf die Wand eines flexiblen Schlauches, durch den die Flüssigkeit kurz vor Austritt aus der Düse fließt, übertragen werden.

Der Zusatz eines gelösten organischen Polymers hat nicht nur den Vorteil, daß die Hydroxide von Hafnium und Additiven als Gele gefällt werden, sondern erlaubt gleichzeitig auch die Einstellung einer für die Tropfenbildung und -stabilisierung günstigen Viskosität der Lösung. Dazu reichen schon kleine Mengen von 1 bis 10 g je Liter Lösung aus. Insbesondere in bezug auf die möglichst vollständige Entfernung dieses Hilfsstoffes beim Kalzinierungsschritt hat sich Polyvinylalkohol besonders bewährt. Aber auch andere Stoffe dieser Art, wie Polyethylenglykol, Methylcellulose oder Dextrin, können mit Erfolg verwendet werden.

Aufgrund der Gleichmäßigkeit der Tropfen und der daraus hergestellten, frisch gefällten Feststoffteilchen ist eine gleichmäßige Behandlung bei der Weiterverarbeitung gewährleistet, wodurch die Erzeugung von Pulvern mit reproduzierbaren Eigenschaften sichergestellt ist, was eine der wichtigsten Voraussetzungen für die Herstellung hochqualifizierter Sinterformkörper ist. Die Gleichmäßigkeit der Teilcheneigenschaften, wie z.B. Dichte und Durchmesser, und die gute Rieselfähigkeit der Teilchen ermöglichen das gleichmäßige Füllen von Preßformen für die Herstellung von Grünlingen, die anschließend dem Sinterprozeß zugeführt werden. Für das Füllen der Matrize ist von besonderem Vorteil, daß bei Verwendung von kugelförmigen Teilchen mit engem Kornspektrum im Bereich zwischen 0,1 mm und 3 mm keine Agglomerate gebildet werden und daß stets gleiche Füllfaktoren von rd. 0,6 störungsfrei erreicht werden. Durch Anwendung mehrerer unterschiedlich großer Teilchensorten, z.B. Teilchen mit den Durchmessern ca. 0,8 mm und ca. 0,2 mm, kann der Füllfaktor durch Ausfüllen der Zwickel zwischen den größeren Teilchen weiter bis auf etwa 0,8 erhöht werden. Dadurch erreicht man besonders kurze Preßwege.

Die gleichmäßige Behandlung der Teilchen in den nachfolgenden Prozeßschritten Waschen, Trocknen und Kalzinieren garantiert ferner die Gleichmäßigkeit der Eigenschaften in bezug auf Porosität und Zerdrückfestigkeit. Es hat sich gezeigt, daß nach dem Herstellungsverfahren gemäß der Erfindung Teilchen mit besonders niedriger Zerdrückfestigkeit von weniger als 1 Newton/Teilchen herstellbar sind, deren Eigenschaften mit denen eines Pulvergranulats vergleichbar sind. Diese Teilchen haben einerseits die für die Handhabung von Schüttgut ausreichende Festigkeit, andererseits sind sie aber von so lockerem Zusammenhalt, daß sie schon bei geringstem Druck zu Pulver zerfallen, dem man die ursprüngliche Form nicht mehr ansieht. Bei dem erfindungsgemäßen Verfahren wird somit die Entstehung der sog. "Brombeerstruktur" vermieden, die beim Zusammenpressen einer Teilchenschüttung von regelmäßiger (kugelförmiger) Gestalt üblicherweise entsteht, und es werden die Vorteile, die sich aus Kofällung und Rieselfähigkeit des Pulvers ergeben, auf besonders wirtschaftliche Weise zur Herstellung von Keramikkörpern mit dichtem, homogenem Gefüge genutzt, was selbst für den Fachmann überraschend ist.

Bei der chemischen Reaktion der Metallsalzlösungen mit Ammoniak entstehen Ammoniumsalze. Wegen der bevorzugten Verwendung von Metallnitraten, -chloriden, -acetaten und -propionaten werden hauptsächlich Ammoniumnitrat, -chlorid,-acetat und -propionat gebildet. Diese Stoffe müssen vor der Weiterverarbeitung der Teilchen ausgewaschen werden, weil die Teilchen sonst bei der Wärmebehandlung infolge Zersetzung dieser Salze zerstört werden. Im Gegensatz zum Auswaschen von üblichen großvolumigen Hydroxidniederschlägen bereitet das Waschen der nach dem erfindungsgemäßen Verfahren hergestellten Gelteilchen in Kugelform keine Schwierigkeiten, weil die Austauschgeschwindigkeit (Diffusion) zwischen Teilchen und umgebender Flüssigkeit sehr schnell erfolgt, d.h. nur wenige Minuten dauert. Dadurch ist es möglich, den Waschprozeß auf einfache Weise kontinuierlich zu gestalten, weil hierbei das fluide Verhalten der Teilchen in wäßriger Phase auf besonders vorteilhafte Weise ausgenutzt werden kann.

Nach dem Waschen werden die Teilchen üblicherweise bei 100°C bis 180°C an Luft getrocknet, wobei die Waschflüssigkeit verdampft und trockene kugelförmige Gelteilchen erhalten werden. Diese Gelteilchen werden anschließend an Luft kalziniert, um das organische Polymer zu zersetzen. Dieser Kalzinierungsprozeß läuft im Temperaturbereich zwischen 300°C und 1.000°C ab, er wird jedoch mit besonderem Vorteil für die Erzielung guter Eigenschaften der Teilchen hinsichtlich Verpreßbarkeit zu Formkörpern und Sinterfähigkeit der Preßlinge zwischen 600°C und 900°C durchgeführt.

Zur Verbesserung der Reproduzierbarkeit der Kalzinierungsergebnisse hat es sich als nützlich erwiesen, unter strömender Luft von konstanter Luftfeuchte im Bereich zwischen 10 g und 30 g Wasser je Kubikmeter Luft zu arbeiten. Je nach Zusammensetzung der Ausgangslösung lassen sich dabei Restkohlenstoffgehalte im Bereich von 10 bis 50 ppm, BET-Oberflächen im Bereich von 10 bis 200 m²/g und Zerdrückfestigkeiten von < 0,2 bis 2 Newton/Teilchen bei Teilchengrößen zwischen 0,2 mm und 1,6 mm Enddurchmesser für Teilchen mit mindestens 80 Gew.- % HfO₂ gezielt einstellen.

Insbesondere kann durch den Anteil des Hafniums die Sinterdichte der hergestellten Kugelkörper, die insbesondere als Mahlkugeln verwendet werden können, zwischen 4 und 9 g/cm³ eingestellt werden. Als Ausgangsmaterialien werden neben reinen Hafniumsalzen mit stabilisierenden Zusätzen von Yttrium- und Lanthanidensalzen sowie Titanverbindungen insbesondere Hafnium-Zirkonsalzgemische verwendet.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von das erfindungsgemäße Verfahren erläuternden Beispielen.

### Beispiel 1:

Für die Herstellung von hochdichten Keramikkörpern aus Y₂O₃-stabilisiertem HfO₂ wurde eine wäßrige Lösung aus Hafnium- und Yttriumnitrat mit Zusatz von Polyvinylalkohol verwendet. Diese als Gießlösung bezeichnete Lösung enthielt je Liter:
59,7 g Hf in Form von abgestumpfter Hf(NO₃)₄-Lösung,
2,5 g Y als Y(NO₃)₃-Lösung,
5,0 g Polyvinylalkohol (PVA) in Wasser gelöst.

Die Gießlösung wurde in Tröpfchen umgewandelt, die durch chemische Reaktion mit Ammoniak feste, kugelförmige Teilchen aus kogefälltem Zirkon- und Yttrium-oxidhydratgel bildeten. Aus einem Vorratsbehälter wurde die Gießlösung durch einen flexiblen Schlauch vom Durchmesser 5 mm zu einer Düse vom Durchmesser 0,35 mm gedrückt, wo die Flüssigkeit ausfloß und Tröpfchen bildete. Kurz vor der Düse war der flexible Schlauch mit einem elektromagnetischen Vibratorsystem mechanisch derart verbunden, daß die Schwingungen vom Vibrator über die Schlauchwand auf die strömende Flüssigkeit übertragen wurden. Dadurch zerfiel der aus der Düse fließende Flüssigkeitsstrahl an Luft in gleich große Tröpfchen, wobei die Tropfenzahl je Sekunde der Vibratorfrequenz von 1.100 Hertz entsprach.

Anschließend fielen die Tröpfchen über eine Strecke von ca. 15 cm Länge durch eine Ammoniakgasatmosphäre, wo sich eine feste Oberflächenhaut bildete. Sodann wurden die ursprünglichen Tröpfchen als diskrete runde Teilchen in Ammoniaklösung aufgefangen. Nach einer Verweilzeit von 30 min wurden die Teilchen mit Wasser nitratfrei gewaschen, danach mit Isopropanol entwässert und dann im Rotationsverdampfer getrocknet.

Die trockenen, gut rieselfähigen Teilchen wurden auf Quarzschalen in einem Muffelofen 3 Stunden bei 500°C an Luft kalziniert. Das erzeugte Produkte war ein grobdisperses Pulver aus kugelförmigen Teilchen mit enger Korngrößenverteilung im Bereich von 260 bis 320 µm und hatte die Zusammensetzung HfO₂/3,7 Gew.% Y₂O₃.

Das Pulver wurde in die Matrize einer Presse eingefüllt und mit einem Preßdruck von 260 MPa zu Zylindern vom Durchmesser 10 mm und einer Höhe 10 mm verarbeitet. Die Gründichte dieser Preßlinge lag bei 4,6 g/cm³. Anschließend wurden die Zylinder bei 1.650°C 2 Stunden an Luft gesintert, wobei sie eine Sinterdichte von 8,61 g/cm³ erreichten, was einer theoretischen Dichte von mehr als 90 % entspricht.

### Beispiel 2:

Eine wäßrige Gießlösung aus Hafnium- und Yttriumpropionat mit Zusatz von Polyvinylalkohol wurde wie in Beispiel 1 zu grobdispersem Pulver aus kugelförmigen Teilchen von 250 bis 300 µm Durchmesser der Zusammensetzung HfO₂/3,7 Gew.% Y₂O₃ verarbeitet.

Die Gießlösung enthielt Hf(C₂H₅COO)₄ und Y(C₂H₅COO)₃ in mit Ammoniak abgepufferter Form sowie 5 g/l PVA in Wasser gelöst.

Die zuerst in Wasser, dann mit Isopropanol gewaschenen Teilchen wurden bei 120°C getrocknet, dann 600°C 24 Stunden an Luft kalziniert.

Eine weitere Menge des aus getrockneten Teilchen bestehenden Pulvers wurde bei 700°C 2 Stunden an Luft kalziniert, dann in eine Matrize gefüllt und mit einem Preßdruck von 600 MPa zu Zylindern einer Gründichte 5,3 g/cm³ Dichte; bei 1.650°C Sintertemperatur wurde eine Dichte von 9,01 g/cm³ erreicht, entsprechend mehr als 93 % der theoretischen Dichte.

### Beispiel 3:

Nach Beispiel 2 hergestellte, bei 700°C 2 Stunden an Luft kalzinierte Teilchen wurden bei 1.650°C 16 Stunden an Luft gesintert; dabei wurde eine Sinterdichte von 8,32 g/cm³ erreicht.

Einige kalzinierte Teilchen wurden bei 1.750°C in Wasserstoff 6 Stunden gesintert und erreichten eine Dichte von 8,8 g/cm³.

### Beispiel 4:

Eine Gießlösung aus einer Alkoxyhafniumverbindung (Hf(OC₃H₇)₄ im Molverhältnis 8:1 wurde analog Beispiel 1 durch eine Düse mit einem Durchmesser von 1 mm gedrückt. Die gebildeten Tröpfchen wurden mit Wasserdampf und/oder feuchtem Ammoniak auf einer Strecke von ca. 20 cm hydrolysiert und oberflächlich gehärtet und anschließend in einer leicht ammoniakalischen wässrigen Lösung aufgefangen und nachgehärtet. Die mit Wasser und Isopropanol gewaschenen und bei 140°C getrockneten Produkte wurden in einem Muffelofen bei 650°C kalziniert und anschließend bei 1.700°C an Luft gesintert, wobei sie eine Sinterdichte von 8,0 g/cm³ erreichten.

### Beispiel 5:

Eine Gießlösung bestehend aus Hf(OC₄H₉)₄ und Y(OC₄H₉)₄ wurde wie in Beispiel 4 beschrieben, zu Pulvern verarbeitet. Es ergaben sich kugelförmige Produkte mit einer Sinterdichte von 8,05 g/cm³.

### Beispiel 6:

Ein Gemisch von Hafnium- und Titanalkoxyverbindungen (Hf(OC₄H₉)₄, Ti(OC₄H₉)₄) wurde analog Beispiel 4 zu gut rieselfähigen Teilchen verarbeitet. Diese werden anschließend bei 650°C unter Inertgas kalziniert.

## Patentansprüche

1. Verfahren zur Herstellung von stabilisiertem Hafniumoxidpulver oder Hafniumoxid enthaltendem Pulver, insbesondere bestimmt für Mahlkugeln,
**dadurch gekennzeichnet,**
daß eine zumindest ein gehärtetes und/oder feindispersiertes folgender Additive wasserlösliche Metallsalze und/oder feindisperse Metalloxide und/oder Yttriumnitrat und/oder Lanthanidennitrate und/oder Titandioxid und/oder ein wasserlösliches organisches Polymer wie Polyvinylalkohol und/oder ein Dispergiermittel wie Isopropanol oder Tetrahydrofurfuryalkohol enthaltende, bis kurz vor dem Fällpunkt abgestumpfte wäßrige Lösung eines Hafniumsalzes oder eines Hafnium und Zirkonium oder Titan enthaltenden Salzes in Tröpfchenform mittels elektromagneticher Schwingungsanregung getropft wird, daß die Tröpfchen durch Einwirken von Ammoniak und/oder Wasserdampf zu diskreten Gelteilchen verfestigt werden, daß danach die Gelteilchen frei von Ammoniumsalzen oder Hydrolyseprodukten gewaschen und anschließend entwässert, getrocknet und kalziniert werden.

2. Verfahren nach Anspruch 1,
**dadurch gekennzeichnet,**
daß zum Vertropfen zumindest eine Düse oder eine die Lösung zumindest einer Düse zuführenden Leitung elektromagnetisch in Schwingung versetzt wird.

3. Verfahren nach Anspruch 1,
**dadurch gekennzeichnet,**
daß als Hafniumsalz Hafniumnitrat mit vorzugsweise einem Nitrat-Hafnium-Molverhältnis über 1,1:1 verwendet wird.

4. Verfahren nach Anspruch 1,
**dadurch gekennzeichnet,**
daß metallorganische Hafniumverbindungen, vorzugsweise Acetate, Propionate und Alkoxyverbindungen verwendet werden.

5. Verfahren nach Anspruch 1,
**dadurch gekennzeichnet,**
daß die mechanischen Schwingungen durch Übertragung elektromagnetischer Schwingungen auf eine flexible Rohrwand erzeugt werden.

6. Verfahren nach Anspruch 1,
**dadurch gekennzeichnet,**
daß die Entwässerung der gewaschenen Gelteilchen mit einem mit Wasser mischbaren Alkohol durchgeführt wird.

7. Verfahren nach zumindest einem der vorhergehenden Ansprüche,
**dadurch gekennzeichnet,**
daß zur Entwässerung der Gelteilchen Isopropanol verwendet wird.

8. Verfahren nach zumindest einem der vorhergehenden Ansprüche,
**dadurch gekennzeichnet,**
daß die Gelteilchen zwischen 600°C und 900°C an feuchter Luft kalziniert werden.

9. Verfahren nach zumindest einem der vorhergehenden Ansprüche,
**dadurch gekennzeichnet,**
daß die Kalzinierung in Inertgasatmosphäre erfolgt.

10. Verfahren nach zumindest einem der vorhergehenden Ansprüche,
**dadurch gekennzeichnet,**
daß die wässrige Lösung vor dem Vertropfen vorzugsweise bis kurz vor dem Fällpunkt abgepuffert bzw. abgestumpft wird.

11. Verfahren zur Herstellung von stabilisiertem Hafniumoxidpulver oder Hafniumoxid und Zirkonoxid enthaltendem Pulver einer Korngröße von zumindest 100 µm, vorzugsweise zwischen 100 µm und 3.000 µm, vorzugsweise bestimmt als festgesinterte Mahlkugeln mit hoher spezifischer Dichte,
**dadurch gekennzeichnet,**
daß eine zumindest ein gehärtetes und/oder feindispersiertes folgender Additive wasserlösliche Metallsalze und/oder feindisperse Metalloxide und/oder Yttriumnitrat und/oder Lanthanidennitrate und/oder Titandioxid und/oder ein wasserlösliches organisches Polymer wie Polyvinylalkohol und/oder ein Dispergiermittel wie Isopropanol oder Tetrahydrofurfuryalkohol enthaltende, bis kurz vor dem Fällpunkt abgestumpfte wäßrige Lösung eines Hafniumsalzes oder eines Hafnium und Zirkonium oder Titan enthaltenden Salzes in Tröpfchenform mittels elektromagneticher Schwingungsanregung vertropft wird, daß die Tröpfchen durch Einwirken von Ammoniak und/oder Wasserdampf zu diskreten Gelteilchen vorverfestigt, sodann in einem wäßrigen ammoniakalischen Fällbad aufgefangen und darin zu den diskreten Gelteilchen gehärtet werden und daß danach die Gelteilchen frei von Ammoniumsalzen oder Hydrolyseprodukten gewaschen und anschließend mit einem Alkohol entwässert, getrocknet und kalziniert werden.

12. Verfahren zur Herstellung von Pulver aus Y₂O₃-stabilisiertem HfO₂,
**dadurch gekennzeichnet,**
- daß eine Gießlösung enthaltend
- eine abgestumpfte Hafniumnitrat-Lösung,
- eine Yttriumnitrat-Lösung sowie
- eine Polyvinylalkohol-Lösung
- durch zumindest eine in mechanische Schwingungen versetzte Düse zur Bildung von Tröpfchen gedrückt wird,
- daß die Tröpfchen zur Ausbildung einer festen Oberflächenhaut einer Ammoniakgasatmosphäre ausgesetzt werden,
- daß die so oberflächenverfestigten Teilchen in einer Ammoniaklösung aufgefangen werden,
- daß nach einer Verweilzeit in der Ammoniaklösung die Teilchen
- nitratfrei gewaschen,
- mit einem Alkohol entwässert und
- sodann getrocknet werden,
- und daß anschließend gut rieselfähige trockene Teilchen kalziniert werden.

13. Verfahren nach Anspruch 12,
**dadurch gekennzeichnet,**
daß das Schlauchelement einer Vibrationsfrequenz von in etwa 1.100 Hertz ausgesetzt wird.

14. Verfahren nach zumindest Anspruch 13,
**dadurch gekennzeichnet,**
daß die Verweilzeit der oberflächenverfestigten Teilchen in der Ammoniaklösung in etwa 30 min. beträgt.

15. Verfahren nach zumindest Anspruch 12,
**dadurch gekennzeichnet,**
daß die Teilchen an Luft vorzugsweise in einem Temperaturbereich von in etwa 400°C - 700°C, vorzugsweise von 500°C kalziniert werden.

## Claims

1. A process for producing stabilized hafnium oxide powder or hafnium-oxide-containing powder, intended in particular for grinding spheres,
**characterized in that** an aqueous solution of a hafnium salt or a salt containing hafnium or zirconium or titanium, containing at least one hardened and/or finely dispersed additive as water-soluble metal salts and/or finely dispersed metal oxides and/or nitrate of yttrium and/or nitrates of lanthanides and/or titanium dioxide and/or a water-soluble organic polymer such as polyvinyl alcohol and/or a dispersing agent such as isopropanol or tetrahydrofurfuryl alcohol, neutralized until just before the precipitation point, is atomized into droplets by means of electromagnetic vibrator excitation, said droplets are consolidated by the action of ammonia and/or steam into discrete gel particles, and said gel particles are then washed until free of ammonia salts or hydrolysis products, dewatered, dried and calcined.

2. A process according to Claim 1,
**characterized in that** for atomization at least one nozzle or a line conveying the solution to at least one nozzle is electromagnetically vibrated.

3. A process according to Claim 1,
**characterized in that** hafnium nitrate preferably with a molar nitrate-hafnium ratio exceeding 1.1 : 1 is used as the hafnium salt.

4. A process according to Claim 1,
**characterized in that** metal-organic hafnium compounds, preferably acetates, propionates and alkoxy compounds are used.

5. A process according to Claim 1,
**characterized in that** the mechanical vibrations are generated by transferring electromagnetic vibrations onto a flexible tube wall.

6. A process according to Claim 1,
**characterized in that** dewatering of said washed gel particles is performed with an alcohol miscible with water.

7. A process according to at least one of the preceding claims,
**characterized in that** isopropanol is used to dewater said gel particles.

8. A process according to at least one of the preceding claims,
**characterized in that** said gel particles are calcined at between 600°C and 900°C in humid air.

9. A process according to at least one of the preceding claims,
**characterized in that** calcination occurs in an inert gas atmosphere.

10. A process according to at least one of the preceding claims,
**characterized in that** before atomization said aqueous solution is buffered or neutralized to just before the precipitation point.

11. A process for producing stabilized hafnium oxide powder or hafnium-oxide-containing or zirconium-oxide-containing powder in a grain size of at least 100 µm, preferably between 100 µm and 3.000 µm, preferably intended as firmly sintered grinding balls with high specific density,
**characterized in that** an aqueous solution of a hafnium salt or a salt containing hafnium and zirconium or titanium, containing at least one hardened and/or finely dispersed additive, water-soluble metal salts and/or finely dispersed metal oxides and/or nitrate of yttrium and/or nitrates of lanthanides and/or titanium dioxide and/or a water-soluble organic polymer such as polyvinyl alcohol and/or a dispersing agent such as isopropanol or tetrahydrofurfuryl alcohol, neutralized until just before the precipitation point, is atomized into droplets by means of electromagnetic vibrator excitation, said droplets are pre-consolidated by the action of ammonia and/or steam into discrete gel particles, and then collected in an aqueous amonniacal precipitation bath and therein hardened into discrete gel particles, and said gel particles are then washed until free of ammonia salts or hydrolysis products and dewatered with an alcohol, dried and calcined.

12. A process for producing powder from Y₂O₃-stabilized HfO₂,
**characterized in that**
- a pouring solution containing
- a neutralized hafnium nitrate solution,
- an yttrium nitrate solution, and
- a polyvinyl alcohol solution
- said solution is forced through at least one mechanically vibrated nozzle to form droplets,
- said droplets are exposed to a gaseous ammonia atmosphere to form a solid surface skin,
- said particles surface-consolidated thereby are collected in an ammonia solution,
- after a residence time in said ammonia solution said particles are
- washed free of nitrates,
- dewatered with an alcohol, and
- then dried,
- easily free-flowing dry particles are then calcined.

13. A process according to Claim 12,
**characterized in that**
said hose element is exposed to a vibration frequency of approximately 1,100 Hertz.

14. A process according to at least Claim 12,
**characterized in that** said residence time of said surface-consolidated particles in said ammonia solution is approximately 30 minutes.

15. A process according to at least Claim 12,
**characterized in that** said particles are calcined in air, preferably in a temperature range of approximately 400°C to 700°C, preferably 500°C.

## Revendications

1. Procédé pour la fabrication de poudre à partir d'oxyde de hafnium stabilisé ou d'une poudre contenant de l'oxyde de hafnium, de préférence destinée à des éléments broyeurs,
**caractérisé en ce qu'** une solution aqueuse d'un sel de hafnium ou d'un sel de hafnium et zirconium ou titanium, contenant au moins un additif, durci et/ou finement divisé, des sels métalliques solubles dans l'eau et/ou des oxydes métalliques finement divisés et/ou nitrate d'yttrium et/ou nitrates de lanthanides et/ou d'oxyde de titanium et/ou d'un polymère organique soluble dans l'eau tel qu'un alcool polyvinylique et/ou d'un agent dispersant tel que de l'ispropanol ou de l'alcool tétrahydrofurylique, neutralisée juste avant la précipitation, est transformée en gouttelettes au moyen d'une excitation d'oscillation électromagnétique, en ce que les gouttelettes sont tout d'abord, sous l'action d'un gaz d'ammoniac et/ou de vapeur d'eau, présolidifiées en particules de gels distinctes et sont ensuite débarrassées des sels d'ammoniaque ou des produits d'hydrolyse par lavage et ensuite sont débarrassées de l'eau, sont séchées et calcinées.

2. Procédé selon la revendication 1,
**caractérisé en ce que** pour la transformation en gouttelettes obtenues par des oscillations électromagnétiques engendrées au moins par une buse ou par la solution de tuyau d'amenée équipé au moins d'une buse.

3. Procédé selon la revendication 1,
**caractérisé en ce qu'** on utilise de préférence comme sel de hafnium, le nitrate de hafnium présentant un rapport molaire nitrate-hafnium supérieur à 1,1 : 1.

4. Procédé selon la revendication 1,
**caractérisé en ce qu'** on utilise des composés organo-métallique de hafnium, de préférence des acétates, des propionates et des alkoxydes.

5. Procédé selon la revendication 1,
**caractérisé en ce que** les oscillations mécaniques sont créées par un transfert d'oscillations électromagnétiques sur une paroi tubulaire flexible.

6. Procédé selon la revendication 1,
**caractérisé en ce qu'** on utilise un alcool miscible avec l'eau pour éliminer l'eau des particules de gel lavées.

7. Procédé selon au moins l'une des revendications précédentes,
**caractérisé en ce qu'** on utilise de l'isopropanol pour éliminer l'eau des particules de gel.

8. Procédé selon au moins l'une des revendications précédentes,
**caractérisé en ce que** les particules de gel sont calcinées entre 600°C et 900°C en présence d'air humide.

9. Procédé selon au moins l'une des revendications précédentes,
**caractérisé en ce que** la calcination s'effectue dans une atmosphère de gaz inerte.

10. Procédé selon au moins l'une des revendications précédentes,
**caractérisé en ce qu'** avant la transformation en gouttelettes, la solution aqueuse est tamponnée de préférence, respectivement neutralisée juste avant la précipitation.

11. Procédé pour la fabrication de poudre d'oxyde de hafnium stabilisé ou d'une poudre contenant de l'oxyde de hafnium et de l'oxyde de zirconium, d'une taille de grains d'au moins 100 µm, de préférence entre 100 pm et 3.000 µm, de préférence destinée à des éléments broyeurs frittés denses avec une haute masse spécifique,
**caractérisé en ce qu'** une solution aqueuse composée d'un sel de hafnium ou un sel de hafnium et zirconium ou titanium, contenant au moins un additif, durci et/ou finement divisé, des sels métalliques solubles dans l'eau et/ou des oxydes métalliques finement divisés et/ou de nitrate d'yttrium et/ou de nitrates de lanthanides et/ou d'oxyde de titanium et/ou d'un polymère organique soluble dans l'eau tel qu'un alcool polyvinylique et/ou d'un agent dispersant tel que de l'ispropanol ou de l'alcool tétrahydrofurylique, neutralisée juste avant la précipitation, est transformée en gouttelettes au moyen d'une excitation d'oscillation électromagnétique, en ce que les gouttelettes sont tout d'abord, sous l'action d'un gaz d'ammoniac et/ou de vapeur d'eau, présolidifiées en particules de gels distinctes et sont ensuite recueillies dans un bain de précipitation contenant une solution aqueuse d'ammoniac, dans lequel elles sont durcies sous forme de particules de gel solides distinctes, et en ce qu'ensuit les particules de gel sont débarrassées des sels d'ammoniaque ou des produits d'hydrolyse par lavage et ensuite sont débarrassées de l'eau, sont séchées et calcinées.

12. Procédé pour la fabrication de poudre de HfO₂ stabilisé avec Y₂O₃,
**caractérisé en ce qu'**
- une solution de coulée contient
- une solution de nitrate de hafnium, neutralisée juste avant la précipitation,
- une solution de nitrate d'yttrium, ainsi qu'
- une solution d'alcool polyvinylique
- est poussée par au moins une buse mécanique oscillante pour transformer les gouttelettes,
- les gouttelettes sont exposées à une atmosphère d'ammoniac en vue à la formation d'une pellicule de surface solide,
- en ce que les particules à surface solidifiée sont récupérées dans une solution d'ammoniac,
- en ce qu'après un temps de séjour dans la solution d'ammoniac les particules
- sont débarrassées des nitrates par lavage,
- sont débarrassées de l'eau à l'aide d'un alcool et
- sont ensuite séchées,
- et en ce que les particules présentent une bonne aptitude à l'écoulement, sont ensuite calcinées.

13. Procédé selon la revendication 12,
**caractérisé en ce que** l'élément tubulaire flexible est exposé à une fréquence de vibration à peu près de 1.100 Hertz.

14. Procédé selon au moins la revendication 12,
**caractérisé en ce que** le temps de séjour des particules à surface solidifiée dans la solution d'ammoniac est d'environ 30 min.

15. Procédé selon au moins la revendication 12,
**caractérisé en ce que** les particules sont calcinées à l'air, de préférence dans une plage de température d'environ 400°C - 700°C, de préférence de 500°C.
